# EUROPEAN PATENT APPLICATION

(11) **EP 4 566 924 A1**
(43) Date of publication of application: **11.06.2025**
(21) Application number: 23911221.2
(22) Date of filing: 29.06.2023
(51) Int. Cl.: B62D 25/20, F16F 7/12

(54) **SHOCK ABSORPTION STRUCTURE FOR VEHICLE BODY**

(30) Priority: 28.12.2022 JP 2022211760
(71) Applicant: Toyoda Iron Works Co., Ltd., Toyota-shi, Aichi 471-8507 (JP)
(72) Inventor: TOCHIGI Yusuke, Toyota-shi, Aichi 471-8507 (JP)
(74) Representative: Zimmermann, Tankred Klaus
(86) International application number: PCT/JP2023/024154
(87) International publication number: WO 2024/142437

(57) **Abstract**

A shock absorption structure for a vehicle body includes, in a closed sectional structure of a rocker (10), an energy absorption member (20) that absorbs collision energy from an outer side in a width direction of the vehicle body, the energy absorption member (20) includes an outer member (21) disposed on the outer side in the width direction of the vehicle body and an inner member (22) disposed on an inner side in the width direction of the vehicle body, the outer member (21) and the inner member (22) are arranged such that a collision load in the width direction of the vehicle body is transmittable therebetween, the outer member (21) is made higher in deformation strength against a collision load from the outer side in the width direction of the vehicle body than that of the inner member (22), and the outer member (21) and the inner member (22) are set to have a longer length in a front-rear direction of the vehicle body than a size of a collision target in the front-rear direction of the vehicle body.

## Description

### TECHNICAL FIELD

The present invention relates to a shock absorption structure for a vehicle body.

### BACKGROUND ART

For example, Japanese Patent No. 6587707 discloses a structure in which an energy absorption member is disposed in a rocker (generally also called a side sill) having a closed sectional structure to absorb shock upon side collision. With the structure above, upon the side collision, the energy absorption member is deformed by receiving a collision load, protects an occupant, and protects, e.g., a battery located inside the rocker in the width direction of a vehicle.

### SUMMARY OF INVENTION

### PROBLEMS TO BE SOLVED BY INVENTION

In the technique disclosed in Japanese Patent No. 6587707, when side collision with an object having a smaller collision area than the front-rear length of the rocker, such as a pole, occurs, the energy absorption member is deformed in a small area corresponding to the size of a collision surface of a collision object. For this reason, there is a possibility that the energy absorption member cannot efficiently absorb the collision load.

An object of the present disclosure is to provide a shock absorption structure in a rocker, in which a collision load is received on a wide surface and transmitted to an energy absorption member, so that the energy absorption member can be deformed over a wide area even when colliding with an object having a small area, such as a pole, and can efficiently absorb the collision load.

### SOLUTION TO PROBLEMS

One aspect of the present disclosure is a shock absorption structure for a vehicle body, which includes, at a lower end portion on each side of the vehicle body, a rocker extending with a longitudinal direction thereof as a front-rear direction of the vehicle body and an energy absorption member that absorbs collision energy from an outer side in a width direction of the vehicle body in a closed sectional structure of the rocker having a hollow structure connected in the longitudinal direction. The energy absorption member includes an outer member disposed on the outer side in the width direction of the vehicle body and an inner member disposed on an inner side in the width direction of the vehicle body. The outer member and the inner member are arranged such that a collision load in the width direction of the vehicle body is transmittable therebetween. The outer member has higher deformation strength against the collision load from the outer side in the width direction of the vehicle body than that of the inner member. The outer member and the inner member are set to have a longer length in the front-rear direction of the vehicle body than the size of a collision target in the front-rear direction of the vehicle body.

### BRIEF DESCRIPTION OF DRAWINGS

Fig. 1 is a schematic configuration diagram illustrating a shock absorption structure of a vehicle according to one embodiment.
Fig. 2 is a longitudinal sectional view of a rocker as one embodiment.
Fig. 3 is a perspective view of the rocker as one embodiment.
Fig. 4 is a view illustrating a collision deformation state of the rocker due to side collision as one embodiment.
Fig. 5 is a view of the collision deformation state of the rocker due to the side collision in one embodiment as viewed from above.
Fig. 6 is a view of a collision deformation state of a rocker due to side collision in a comparative example as viewed from above.
Fig. 7 is a longitudinal sectional view of a rocker in another embodiment.
Fig. 8 is a perspective view of an energy absorption member of a rocker in still another embodiment.
Fig. 9 is a view of only an outer member of the energy absorption member of the embodiment of Fig. 8 as viewed from an inner side.
Fig. 10 is a perspective view of an energy absorption member of a rocker in still another embodiment.
Fig. 11 is a sectional view taken along line IX-IX in Fig. 10.
Fig. 12 is a perspective view of an energy absorption member of a rocker in still another embodiment.
Fig. 13 is a longitudinal sectional view of a rocker in still another embodiment.
Fig. 14 is a longitudinal sectional view of a rocker in still another embodiment.
Fig. 15 is a view illustrating a collision deformation state of an energy absorption member due to side collision in the embodiment of Fig. 14.
Fig. 16 is a view illustrating a collision deformation state of an energy absorption member due to side collision in a comparative example.

### DESCRIPTION OF EMBODIMENTS

Various embodiments will be described hereinafter with reference to the drawings. One embodiment is a structure that absorbs shock upon side collision to protect a battery of an electric automobile. Note that UPR as the indication of a direction in description of the figures indicates an upper side, OUT indicates an outer side as viewed from the interior of the automobile, FR indicates the front side of the automobile, and RR indicates the rear side of the automobile. Thus, the direction indicated by UPR is an up-down direction of a vehicle body, the direction indicated by OUT is the width direction of the vehicle body, and the direction indicated by FR and RR is a front-rear direction of the vehicle body.

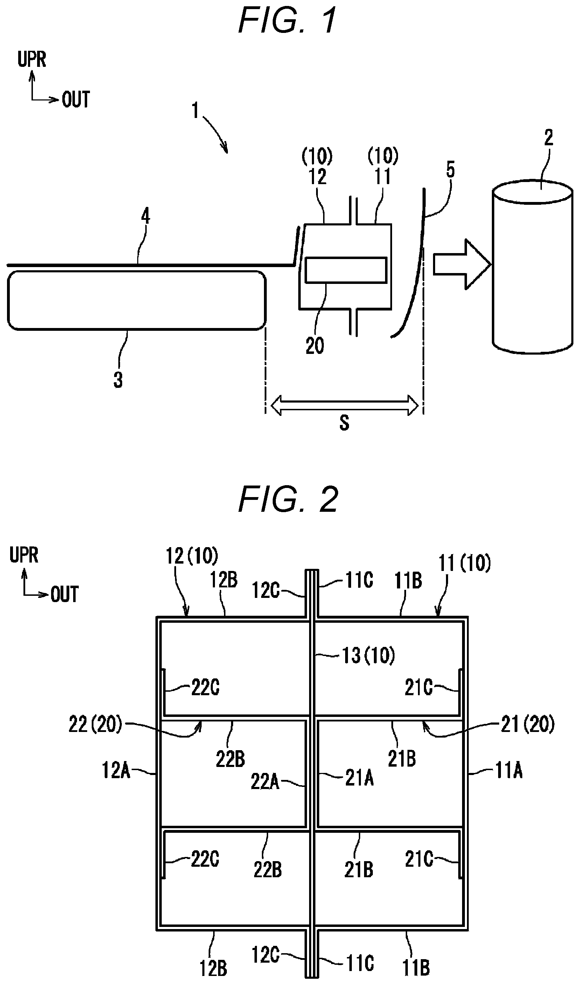

Fig. 1 schematically illustrates a longitudinal section of a shock absorption structure 1, in which a pole 2 for a pole side collision test is disposed next to the vehicle body of the automobile. A battery 3, which is a power source of the electric automobile, is disposed under a floor 4 of the electric automobile. A rocker 10 forming the skeleton of the vehicle body of the automobile is disposed on an outer side portion of the floor 4, and further, a side door 5 (usually a front door) is disposed on the outer side of the rocker 10. Furthermore, the pole 2 is disposed on the outer side of the side door 5 in the pole side collision test. It is configured such that when the side door 5 collides with the pole 2, the shock absorption structure 1 absorbs collision energy within an area S between the side door 5 and the battery 3 to protect the battery 3. Particularly, it is configured such that the energy is absorbed in the rocker 10.

### <Energy Absorption Member>

In the above-described embodiment, an energy absorption member 20 is disposed over the entire area in the front-rear direction of the vehicle body in the rocker 10, so that the energy of the side collision can be absorbed at the position of the rocker 10. In the rocker 10, an outer rocker member 11 disposed on the outer side and an inner rocker member 12 disposed on the inner side are formed in a so-called hat-shaped sectional shape, and both these members 11, 12 are combined to form a closed sectional structure. As a result, the rocker 10 is formed in a hollow structure, and this hollow structure extends in the front-rear direction of the vehicle body. Note that the material of the energy absorption member 20 can be any steel material suitable for energy absorption based on deformation due to crush. As the material of the energy absorption member 20, other materials such as aluminum can also be used.

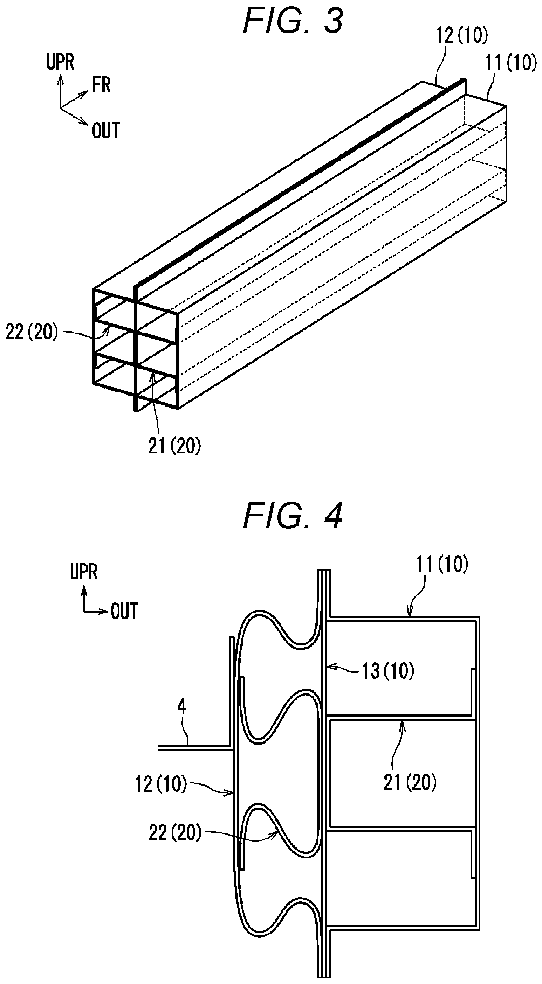

Figs. 2 and 3 illustrate the structure of the rocker 10. The outer rocker member 11 and the inner rocker member 12 are both formed in the hat-shaped sectional shape, and include top plate portions 11A, 12A, vertical wall portions 11B, 12B, and flange portions 11C, 12C, respectively. The outer rocker member 11 and the inner rocker member 12 are combined such that the open sides of the hat shapes thereof face each other, and each pair of flange portions 11C, 12C overlaps each other. A plate-shaped partition member 13 is sandwiched between each pair of flange portions 11C, 12C. Thus, a space in the closed sectional structure formed by the outer rocker member 11 and the inner rocker member 12 is divided into two spaces in the width direction of the vehicle body by the partition member 13.

Since the space in the closed sectional structure is divided into the two spaces as described above, the energy absorption member 20 is also provided so as to be distributed into the two spaces. An outer member 21 of the energy absorption member 20 is provided in the outer rocker member 11, and an inner member 22 of the energy absorption member 20 is provided in the inner rocker member 12. The outer member 21 and the inner member 22 are both formed in a hat-shaped sectional shape. The outer member 21 and the inner member 22 in the hat-shaped sectional shape include top plate portions 21A, 22A, vertical wall portions 21B, 22B, and flange portions 21C, 22C, respectively. The top plate portions 21A, 22A are combined so as to face each other, and are joined so as to sandwich the partition member 13 at a center portion of the partition member 13 in the up-down direction. The flange portions 21C, 22C are joined to an inner wall of the outer rocker member 11 and an inner wall of the inner rocker member 12, respectively. Thus, each of the vertical wall portions 21B, 22B serves as a deformation portion which is deformed by a collision load from the outer side in the width direction of the vehicle body and absorbs the collision energy. Each of the vertical wall portions 21B, 22B is a plate member having a plate surface extending in the width direction of the vehicle body. The vertical wall portion 21B is a steel material having higher strength against bending deformation due to crush as compared to the vertical wall portion 22B. Such a difference in strength between the vertical wall portion 21B and the vertical wall portion 22B can be easily obtained by providing a difference in overall strength between the outer member 21 and the inner member 22. In order to provide the difference in strength as described above, steel materials having different strengths may be used, or a plate thickness may be changed using the same material. Alternatively, the material may be changed.

### [Effects of Embodiment Above]

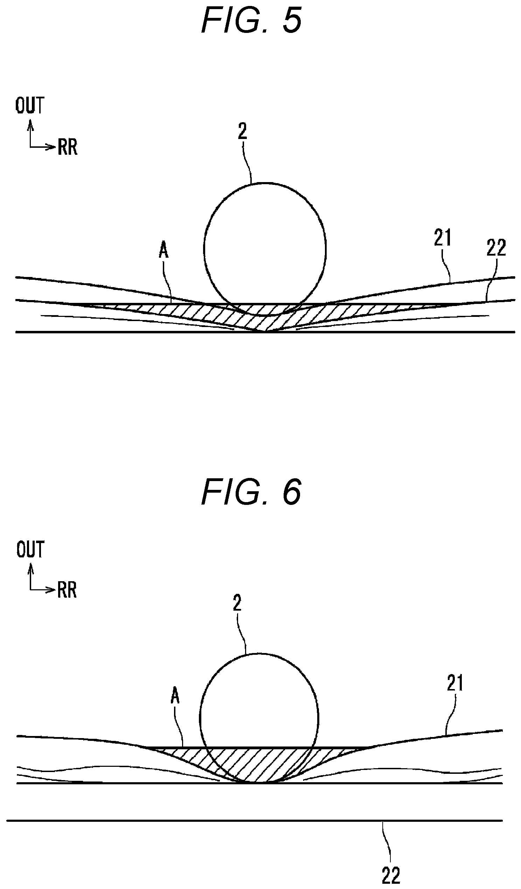

Figs. 4 and 5 illustrate deformation states of the rocker 10 and the energy absorption member 20 after the pole side collision test. As described above, in the energy absorption member 20, the strength of the outer member 21 is higher than the strength of the inner member 22. Thus, when a collision load is applied to the energy absorption member 20 via the outer rocker member 11 of the rocker 10, the collision load is transmitted to the inner member 22 before the outer member 21 is deformed, and the inner member 22 is deformed first, as illustrated in Fig. 4. Thus, as illustrated in Fig. 5, even if the pole 2 applies the collision load to a narrow area in the front-rear direction of the vehicle body, the collision load is transmitted to a wide area of the inner member 22 via the outer member 21, and the inner member 22 is deformed over the wide area. As a result, the energy absorption member 20 can efficiently absorb the collision energy by maximally utilizing its performance. In Fig. 5, a hatched area A indicates the deformed area of the inner member 22.

Fig. 6 illustrates deformation states of the rocker 10 and the energy absorption member 20 after the pole side collision test in a comparative example. In the comparative example, there is no difference in strength between the outer member 21 and the inner member 22 as in the embodiment above. Thus, when the collision load from the pole 2 is applied to the energy absorption member 20 in the rocker 10, the outer member to which the collision load is applied first is deformed first and the inner member is deformed in response to such deformation, as illustrated in Fig. 6. Accordingly, the rocker 10 is deformed in a narrow area in the front-rear direction of the vehicle body, which is equivalent to the area collided with the pole 2, and cannot efficiently absorb the collision load. In Fig. 6, a hatched area A indicates the deformed area of the energy absorption member 20. The size of the area A of Fig. 6 in the front-rear direction of the vehicle body is equal to the width of the pole 2 in the front-rear direction of the vehicle body. On the other hand, the size of the area A of Fig. 5 is larger than the area A of Fig. 6, and the size of the energy absorption member 20 in the front-rear direction of the vehicle body is larger than the width of the pole 2 in the front-rear direction of the vehicle body.

### <Another Embodiment>

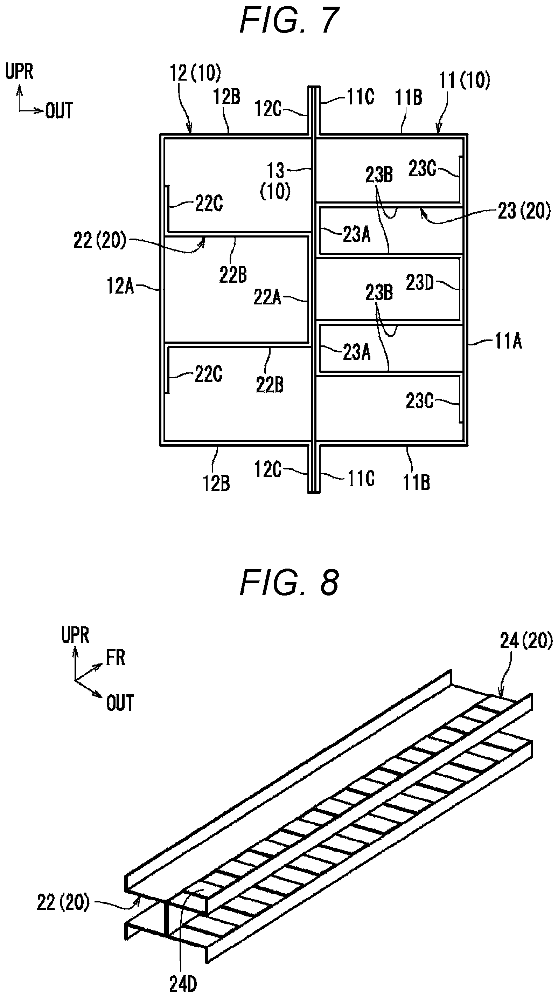

As illustrated in Fig. 7, in another embodiment, the shape of an outer member 23 of the energy absorption member 20 is changed from the hat-shaped sectional shape of the outer member 21 of the embodiment above. The other configurations are the same as those of the embodiment above, and the same parts will not be described again.

The outer member 23 of the energy absorption member 20 of the another embodiment illustrated in Fig. 7 is deformed such that a center portion of a top plate portion 23A in the up-down direction of the vehicle body moves to a position aligned with a flange portion 23C, and has a substantially W-shaped sectional shape. A bottom portion 23D moved to the position aligned with the flange portion 23C is joined to the inner wall surface of the outer rocker member 11 of the rocker 10 together with the flange portion 23C. Thus, a vertical wall portion 23B of the outer member 23 includes four members arranged in parallel with each other. Each vertical wall portion 23B serves as a deformation portion which is deformed by the collision load from the outer side in the width direction of the vehicle body and absorbs the collision energy. Each vertical wall portion 23B is a plate member having a plate surface extending in the width direction of the vehicle body.

In the another embodiment illustrated in Fig. 7, the number of vertical wall portions 23B is four in the outer member 23. On the other hand, in the inner member 22, the number of vertical wall portions 22B remains two. Here, steel materials having the same strength are used for the vertical wall portion 23B and the vertical wall portion 22B. Thus, the number of vertical wall portions 23B of the outer member 23 is larger than the number of vertical wall portions 22B of the inner member 22, and the strength against the bending deformation due to crush is higher in the outer member 23 than in the inner member 22 as a whole. Thus, as in the case of the embodiment above, even if the pole 2 applies the collision load to the narrow area of the rocker 10 in the front-rear direction of the vehicle body, the collision load is transmitted to a wide area of the inner member 22 via the outer member 23, and the inner member 22 is deformed over the wide area in the present embodiment as well. As a result, the collision load can be efficiently absorbed.

### <Still Another Embodiment>

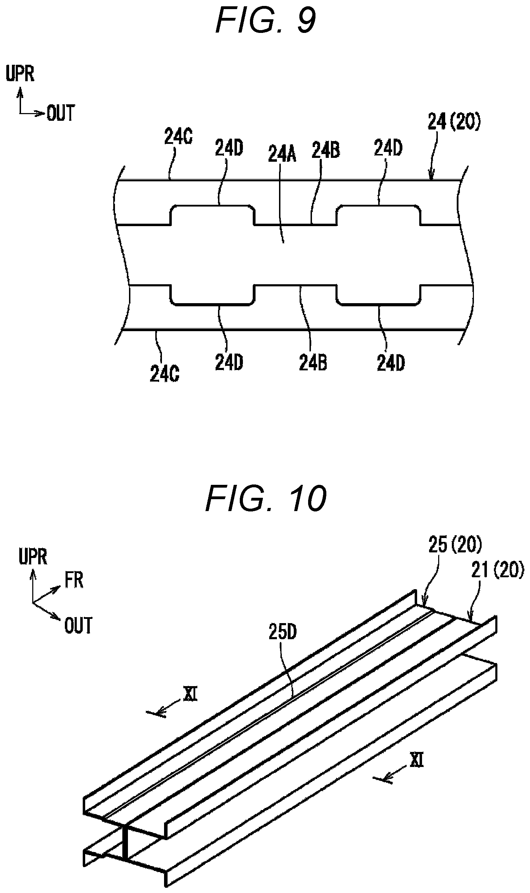

As illustrated in Figs. 8 and 9, in still another embodiment, an outer member 24 of the energy absorption member 20 includes a reinforcement structure. The other configurations are the same as those of the embodiment above, and the same parts will not be described again.

In the still another embodiment illustrated in Figs. 8 and 9, in the energy absorption member 20 provided in the rocker 10, a bead 24D extending in the width direction of the vehicle body is formed at a vertical wall portion 24B of the outer member 24. A plurality of the beads 24D is formed in the front-rear direction of the vehicle body. The beads 24D are formed by press-molding the vertical wall portion 24B as illustrated in Fig. 9, and form the reinforcement structure of the vertical wall portion 24B. That is, the strength of the vertical wall portion 24B in the width direction of the vehicle body is increased by the beads 24D extending in the width direction of the vehicle body. In the present embodiment, the steel materials having the same strength are used for the outer member 24 and the inner member 22, and the deformation strength of the outer member 24 is made higher than that of the inner member 22 by the reinforcement structure. Thus, as in the case of the embodiment above, even if the pole 2 applies the collision load to a narrow area of the rocker 10 in the front-rear direction of the vehicle body, the collision load is transmitted to a wide area of the inner member 22 via the outer member 24, and the inner member 22 is deformed over the wide area in the present embodiment as well. As a result, the collision load can be efficiently absorbed. In Fig. 9, reference numeral 24C indicates a flange portion of the outer member 24.

### <Still Another Embodiment>

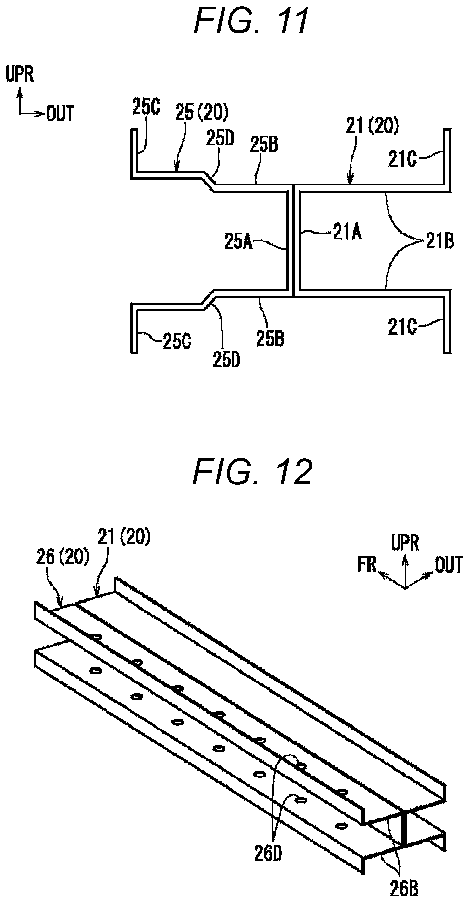

As illustrated in Figs. 10 and 11, in still another embodiment, an inner member 25 of the energy absorption member 20 includes a fragile structure. The other configurations are the same as those of the embodiment above, and the same parts will not be described again.

In the still another embodiment illustrated in Figs. 10 and 11, in the energy absorption member 20 provided in the rocker 10, a step 25D extending in the front-rear direction of the vehicle body is formed at a vertical wall portion 25B of the inner member 25. The step 25D is formed by press-molding the vertical wall portion 25B as illustrated in Fig. 11, and forms the fragile structure of the vertical wall portion 25B. The step 25D is provided at a center portion of the vertical wall portion 25B in the width direction of the vehicle body. Due to the step 25D, the width between the vertical wall portions 25B facing each other in the up-down direction of the vehicle body is larger on the inner side than on the outer side in the width direction of the vehicle body. Since the step 25D is formed at the vertical wall portion 25B as described above, the deformation strength of the vertical wall portion 25B against the load in the width direction of the vehicle body is low. In the present embodiment, the steel materials having the same strength are used for the outer member 24 and the inner member 22, and the deformation strength of the inner member 25 is made lower than that of the outer member 21 by the fragile structure. That is, the deformation strength of the outer member 21 is made higher than that of the inner member 25. Thus, as in the case of the embodiment above, even if the pole 2 applies the collision load to a narrow area of the rocker 10 in the front-rear direction of the vehicle body, the collision load is transmitted to a wide area of the inner member 25 via the outer member 21, and the inner member 25 is deformed over the wide area in the present embodiment as well. As a result, the collision load can be efficiently absorbed. In Fig. 11, reference numeral 25A indicates a top plate portion of the inner member 25, and reference numeral 25C indicates a flange portion of the inner member 25.

### <Still Another Embodiment>

In still another embodiment illustrated in Fig. 12, an inner member 26 of the energy absorption member 20 includes a fragile structure. The other configurations are the same as those of the embodiment above, and the same parts will not be described again.

In the still another embodiment illustrated in Fig. 12, in the energy absorption member 20 provided in the rocker 10, a circular through-hole 26D is formed in a center portion of a vertical wall portion 26B of the inner member 26 in the width direction of the vehicle body. A plurality of the through-holes 26D (in Fig. 12, seven for each vertical wall portion 26B, and 14 in total) is formed along the front-rear direction of the vehicle body in the vertical wall portion 25B to form the fragile structure of the vertical wall portion 26B. Since the through-holes 26D are formed in the vertical wall portion 26B as described above, the deformation strength of the vertical wall portion 26B against the load in the width direction of the vehicle body is low. The shape and size of the through-hole 26D can be appropriately determined according to the strength required for the vertical wall portion 26B. In the present embodiment, as the steel materials which are base materials of the outer member 21 and the inner member 26, those having the same strength are used, and the deformation strength of the inner member 26 is made lower than that of the outer member 21 by the fragile structure. That is, the deformation strength of the outer member 21 is made higher than that of the inner member 26. Thus, as in the case of the embodiment above, even if the pole 2 applies the collision load to a narrow area of the rocker 10 in the front-rear direction of the vehicle body, the collision load is transmitted to a wide area of the inner member 26 via the outer member 21, and the inner member 26 is deformed over the wide area in the present embodiment as well. As a result, the collision load can be efficiently absorbed.

### <Still Another Embodiment>

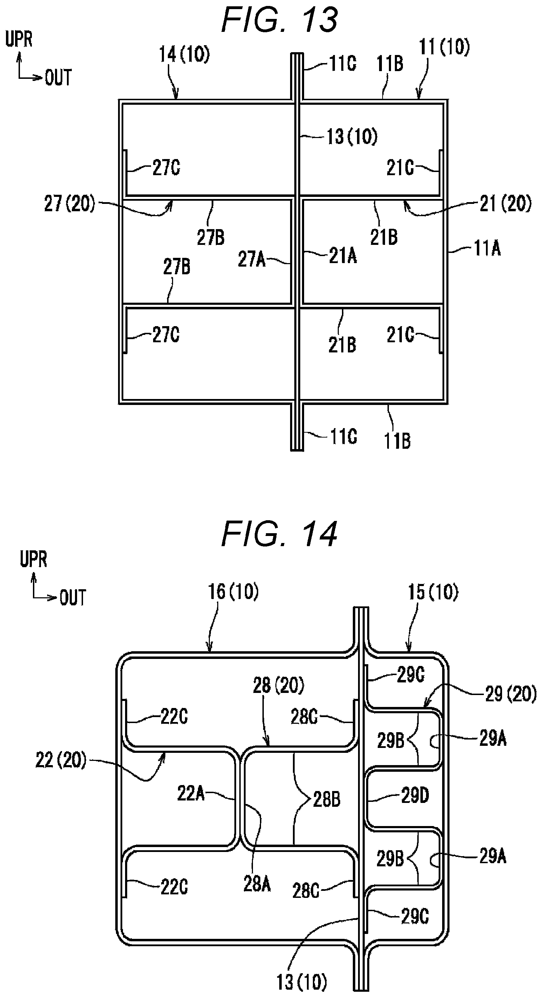

In still another embodiment illustrated in Fig. 13, in an inner member 27 of the energy absorption member 20, the dimension of a vertical wall portion 27B in the width direction of the vehicle body is made larger than the dimension of the vertical wall portion 21B of the outer member 21 in the width direction of the vehicle body. The other configurations are the same as those of the embodiment above, and the same parts will not be described again.

In the still another embodiment illustrated in Fig. 13, the dimension of the vertical wall portion 27B of the inner member 27 of the energy absorption member 20 in the width direction of the vehicle body is made larger than the dimension of the vertical wall portion 21B of the outer member 21 in the width direction of the vehicle body. In the inner member 27 having the hat-shaped sectional shape, a top plate portion 27A is joined to the partition member 13, and a flange portion 27C is joined to an inner rocker member 14. Thus, when a side collision load is applied from the outer side in the width direction of the vehicle body, the vertical wall portion 27B of the inner member 27 has lower bending deformation strength due to the crush than that of the vertical wall portion 21B of the outer member 21. In the present embodiment, as the steel materials which are base materials of the outer member 21 and the inner member 27, those having the same strength are used, and the deformation strength of the inner member 27 is made lower than that of the outer member 21 by the difference in dimension between the vertical wall portion 27B and the vertical wall portion 21B. That is, the deformation strength of the outer member 21 is relatively made higher than that of the inner member 27. Thus, as in the case of the embodiment above, even if the pole 2 applies the collision load to a narrow area of the rocker 10 in the front-rear direction of the vehicle body, the collision load is transmitted to a wide area of the inner member 27 via the outer member 21, and the inner member 27 is deformed over the wide area in the present embodiment as well. As a result, the collision load can be efficiently absorbed.

### <Still Another Embodiment>

In still another embodiment illustrated in Fig. 14, an intermediate member 28 is sandwiched in the width direction of the vehicle body between an outer member 29 and the inner member 22 of the energy absorption member 20. The other configurations are the same as those of the embodiment above, and the same parts will not be described again.

In the still another embodiment illustrated in Fig. 14, the dimension of an inner rocker member 16 in the width direction of the vehicle body is made larger than that of an outer rocker member 15 of the rocker 10. The inner member 22 and intermediate member 28 of the energy absorption member 20 are provided in a space defined by the inner rocker member 16 and the partition member 13. The inner member 22 and the intermediate member 28 are arranged adjacent to each other in the width direction of the vehicle body such that the open sides of the hat-shaped sectional shapes thereof face opposite directions, and a top plate portion 22A and a top plate portion 28A thereof are joined to each other. Each flange portion 22C of the inner member 22 is joined to the inner wall of the inner rocker member 16, and each flange portion 28C of the intermediate member 28 is joined to the inner wall surface of the partition member 13.

The outer member 29 of the energy absorption member 20 is provided in a space defined by the outer rocker member 15 and the partition member 13. The outer member 29 is deformed such that a center portion of a top plate portion 29A in the up-down direction of the vehicle body moves to a position aligned with a flange portion 29C, and has a substantially W-shaped sectional shape. A bottom portion 29D moved to the position aligned with the flange portion 29C is joined to the outer wall surface of the partition member 13 of the rocker 10 together with the flange portion 29C. The top plate portion 29A divided into two is joined to the inner wall surface of the outer rocker member 15. As a result, in the energy absorption member 20, the outer member 29, the intermediate member 28, and the inner member 22 are arranged in this order from the outer side in the width direction of the vehicle body. The deformation strength of each of the members 29, 28, 22 against the collision load from the outer side in the width direction of the vehicle body is set higher in the outer member 29 than in the intermediate member 28 and higher in the intermediate member 28 than in the inner member 22. Specifically, the outer member 29 uses the same steel material as that of the intermediate member 28, but in the outer member 29, the dimension of a vertical wall portion 29B in the width direction of the vehicle body is made smaller than the dimension of a vertical wall portion 29B of the intermediate member 28 in the width direction of the vehicle body, and the number of vertical wall portions 29B forming a deformation portion is made larger than that of the vertical wall portion 28B. Further, the dimension of the vertical wall portion 28B in the width direction of the vehicle body and the number of vertical wall portions 28B are the same as the dimension of the vertical wall portion 22B in the width direction of the vehicle body and the number of vertical wall portions 22B, respectively. However, the inner member 22 is made of a steel material having higher strength in the width direction of the vehicle body against the bending deformation due to crush than that of the intermediate member 28.

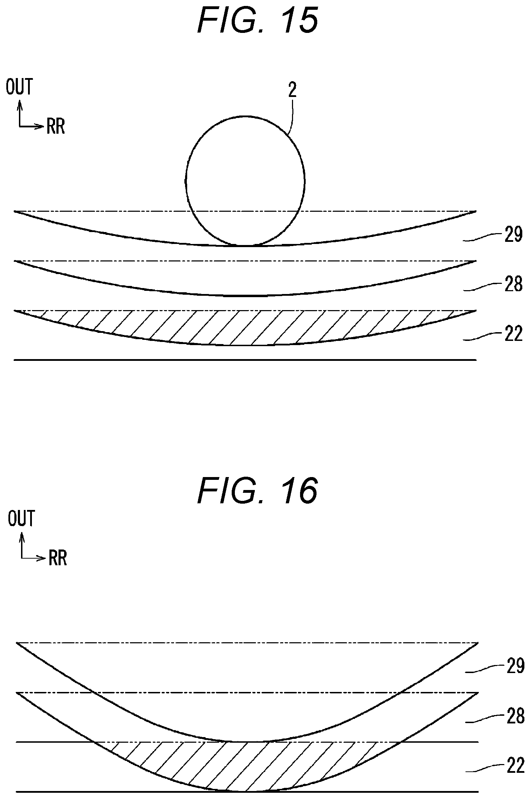

Thus, in the still another embodiment illustrated in Fig. 14, when the rocker 10 receives the collision load from the outer side in the width direction of the vehicle body, the inner member 22, the intermediate member 28, and the outer member 29 are deformed in this order. Thus, as illustrated in Fig. 15, even if the pole 2 applies the collision load to a narrow area of the rocker 10 in the front-rear direction of the vehicle body, the collision load is transmitted to a wide area of the inner member 22 via the outer member 29 and the intermediate member 28, and the inner member 22 is deformed over the wide area. As a result, the collision load can be efficiently absorbed.

Fig. 16 illustrates deformation states of the outer member 29, the intermediate member 28, and the inner member 22 in the comparative example. In the comparative example, the deformation strength against the collision load from the outer side in the width direction of the vehicle body is set higher in the outer member 29 than in the intermediate member 28 and lower in the intermediate member 28 than in the inner member 22. Thus, the outer member 29 transmits the collision load to the intermediate member 28 over a wide area in the front-rear direction of the vehicle body, but a portion of the intermediate member 28 pressed by the outer member 29 is deformed in its shape. As a result, the inner member 22 can be deformed only in a narrower area as compared to the case illustrated in Fig. 15. In Figs. 15 and 16, a hatched area indicates the deformed area of the inner member 22. As described above, according to the present embodiment, the inner member 22 can be deformed over the wide area to efficiently absorb the collision load.

### <Other Embodiments>

Although the specific embodiments have been described above, the present invention is not limited to the appearances and configurations thereof, and various changes, additions, and deletions can be made. For example, in the embodiments above, the energy absorption member is formed of the members having the hat-shaped sectional shape, but the present invention is not limited thereto. In addition, in the embodiments above, the example where the energy absorption member includes the two members of the outer member and the inner member and the example where the energy absorption member includes the three members of the outer member, the intermediate member, and the inner member have been described, but the energy absorption member may include four or more members. Further, in the embodiments above, the partition member is provided inside the rocker, but a structure without the partition member may be employed.

In some embodiments, each of the outer member and the inner member includes the deformation portion which is deformed by the collision load from the outer side in the width direction of the vehicle body and absorbs the collision energy, the outer member has a larger number of deformation portions than that of the inner member, and the plurality of deformation portions is arranged in parallel in the width direction of the vehicle body.

In some embodiments, each of the outer member and the inner member includes the deformation portion which is deformed by the collision load from the outer side in the width direction of the vehicle body and absorbs the collision energy, the deformation portion includes the plate member whose plate surface extends in the width direction of the vehicle body, and the outer member has a smaller dimension of the plate member in the width direction of the vehicle body than that of the inner member.

In some embodiments, each of the outer member and the inner member includes the deformation portion which is deformed by the collision load from the outer side in the width direction of the vehicle body and absorbs the collision energy, and the deformation portion of the outer member includes the reinforcement structure that increases the deformation strength against the collision load in the width direction of the vehicle body.

In some embodiments, each of the outer member and the inner member includes the deformation portion which is deformed by the collision load from the outer side in the width direction of the vehicle body and absorbs the collision energy, and the deformation portion of the inner member includes the fragile structure that decreases the deformation strength against the collision load in the width direction of the vehicle body.

In some embodiments, each of the outer member and the inner member includes the deformation portion which is deformed by the collision load from the outer side in the width direction of the vehicle body and absorbs the collision energy, and the deformation portion of the outer member is made of the material having relatively higher deformation strength against the collision load in the width direction of the vehicle body than that of the inner member.

In some embodiments, the intermediate member is provided between the outer member and the inner member in the width direction of the vehicle body. The outer member, the intermediate member, and the inner member are arranged such that the collision load in the width direction of the vehicle body is mutually transmittable between the adjacent members. The outer member, the inner member, and the intermediate member have a relationship in the deformation strength against the collision load from the outer side in the width direction of the vehicle body, in which the outer member is stronger than the intermediate member and the intermediate member is stronger than the inner member.

### <Effects of Embodiments>

Finally, the effects of the embodiments above will be additionally described.

In the embodiments above, when the rocker receives a collision load from a collision target on the outer side in the width direction of the vehicle body, the inner member is deformed prior to the outer member. As a result, the outer member of the energy absorption member transmits the collision load to the inner member over a wider area in the front-rear direction of the vehicle body than that of the collision target. Thus, the inner member is deformed over a wider area than that of the collision target to absorb the collision energy. As a result, the energy absorption member can efficiently absorb the collision energy by maximally utilizing its performance. As a result, the energy absorption member can be reduced in weight.

In some embodiments, the outer member has a larger number of deformation portions than that of the inner member, so that the deformation strength against the collision load is made higher than that of the inner member.

In some embodiments, the outer member is smaller in the dimension of the plate member forming the deformation portion in the width direction of the vehicle body than that of the inner member. Thus, the deformation strength of the outer member against the collision load is made higher than that of the inner member. That is, the outer member having a smaller dimension of the plate member in the width direction of the vehicle body is less likely to cause the bending deformation of the plate member when receiving the collision load as compared to the inner member having a larger dimension of the plate member in the width direction of the vehicle body.

In some embodiments, the outer member includes the reinforcement structure in which the deformation portion increases the deformation strength against a collision load in the width direction of the vehicle body. Thus, the deformation strength of the outer member against the collision load is made higher than that of the inner member.

In some embodiments, the inner member includes the fragile structure in which the deformation portion decreases the deformation strength against the collision load in the width direction of the vehicle body. Thus, the deformation strength of the inner member against the collision load is made lower than that of the outer member. The deformation strength of the outer member against the collision load is made relatively higher than that of the inner member.

In some embodiments, the deformation portion of the outer member is made of the material having relatively higher deformation strength against the collision load in the width direction of the vehicle body than that of the inner member. Thus, the deformation strength of the outer member against the collision load is made higher than that of the inner member.

In some embodiments, when the rocker receives the collision load from the collision target on the outer side in the width direction of the vehicle body, the intermediate member is deformed prior to the outer member. As a result, the outer member of the energy absorption member transmits the collision load to the intermediate member over a wider area in the front-rear direction of the vehicle body than that of the collision target. Similarly, the intermediate member transmits the collision load transmitted from the outer member to the inner member in the area where the outer member receives the collision load. Thus, the inner member is deformed over a wider area than that of the collision target to absorb the collision energy. As a result, the energy absorption member can efficiently absorb the collision energy. As a result, the energy absorption member can be reduced in weight.

The various embodiments described above in detail with reference to the accompanying drawings are representative examples of the present invention, and do not limit the present invention. The detailed description is intended to teach those skilled in the art to make, use, and/or implement various aspects of the present teachings, and does not limit the scope of the invention. Furthermore, each additional feature and teaching described above may be applied and/or used separately or together with other features and teachings to provide modifications of a shock absorption structure for a vehicle body and/or manufacturing and use methods therefor.

## Claims

1. A shock absorption structure for a vehicle body, comprising:
a rocker extending with a longitudinal direction thereof as a front-rear direction of the vehicle body and having a closed sectional structure having a hollow structure connected in the longitudinal direction; and
an energy absorption member that absorbs shock energy upon side collision of a vehicle from an outer side in a width direction of the vehicle body,
wherein the energy absorption member includes an outer member disposed on the outer side in the width direction of the vehicle body and an inner member disposed on an inner side in the width direction of the vehicle body,
the outer member and the inner member are arranged such that a collision load in the width direction of the vehicle body is transmittable therebetween,
the outer member is made higher in deformation strength against a collision load from the outer side in the width direction of the vehicle body than that of the inner member, and
the outer member and the inner member are set to have a longer length in the front-rear direction of the vehicle body than a size of a collision target in the front-rear direction of the vehicle body.

2. The shock absorption structure for the vehicle body according to claim 1, wherein
each of the outer member and the inner member includes a deformation portion which is deformed by the collision load from the outer side in the width direction of the vehicle body and absorbs the collision energy, and
the outer member has a larger number of deformation portions than that of the inner member, and the plurality of deformation portions is arranged in parallel in the width direction of the vehicle body.

3. The shock absorption structure for the vehicle body according to claim 1, wherein
each of the outer member and the inner member includes a deformation portion which is deformed by the collision load from the outer side in the width direction of the vehicle body and absorbs the collision energy,
the deformation portion includes a plate member whose plate surface extends in the width direction of the vehicle body, and
the outer member has a smaller dimension of the plate member in the width direction of the vehicle body than that of the inner member.

4. The shock absorption structure for the vehicle body according to claim 1, wherein
each of the outer member and the inner member includes a deformation portion which is deformed by the collision load from the outer side in the width direction of the vehicle body and absorbs the collision energy, and
the deformation portion of the outer member includes a reinforcement structure that increases the deformation strength against the collision load in the width direction of the vehicle body.

5. The shock absorption structure for the vehicle body according to claim 1, wherein
each of the outer member and the inner member includes a deformation portion which is deformed by the collision load from the outer side in the width direction of the vehicle body and absorbs the collision energy, and
the deformation portion of the inner member includes a fragile structure that decreases the deformation strength against the collision load in the width direction of the vehicle body.

6. The shock absorption structure for the vehicle body according to claim 1, wherein
each of the outer member and the inner member includes a deformation portion which is deformed by the collision load from the outer side in the width direction of the vehicle body and absorbs the collision energy, and
the deformation portion of the outer member is made of a material having higher deformation strength against the collision load in the width direction of the vehicle body than that of the inner member.

7. The shock absorption structure for the vehicle body according to claim 1, further comprising:
an intermediate member between the outer member and the inner member in the width direction of the vehicle body,
wherein the outer member, the intermediate member, and the inner member are arranged such that the collision load in the width direction of the vehicle body is mutually transmittable between adjacent members, and
the outer member, the inner member, and the intermediate member have a relationship in the deformation strength against the collision load from the outer side in the width direction of the vehicle body, in which the outer member is stronger than the intermediate member and the intermediate member is stronger than the inner member.
